# EUROPEAN PATENT SPECIFICATION

(11) **EP 4 131 486 B1**
(45) Date of publication and mention of the grant of the patent: **17.12.2025**
(21) Application number: 20928679.8
(22) Date of filing: 31.03.2020
(51) Int. Cl.: H01M 4/38, H01M 4/58, H01M 4/587, H01M 4/62, H01M 10/052, H01M 10/0525, H01M 4/133, H01M 4/48, H01M 4/134, H01M 4/36, H01M 4/02, H01M 4/1393, H01M 4/1395

(54) **NEGATIVE ELECTRODE MATERIAL, NEGATIVE POLE PIECE, ELECTROCHEMICAL APPARATUS AND ELECTRONIC APPARATUS**
NEGATIVES ELEKTRODENMATERIAL, NEGATIVES POLSTÜCK, ELEKTROCHEMISCHE VORRICHTUNG UND ELEKTRONISCHE VORRICHTUNG
MATÉRIAU D'ÉLECTRODE NÉGATIVE, PIÈCE POLAIRE NÉGATIVE, APPAREIL ÉLECTROCHIMIQUE ET APPAREIL ÉLECTRONIQUE

(43) Date of publication of application: 08.02.2023
(73) Proprietor: Ningde Amperex Technology Limited, Ningde, Fujian 352100 (CN)
(72) Inventor: CHEN, Congrong, Ningde, Fujian 352100 (CN); CHEN, Zhihuan, Ningde, Fujian 352100 (CN); CUI, Hang, Ningde, Fujian 352100 (CN); XIE, Yuansen, Ningde, Fujian 352100 (CN)
(74) Representative: Icosa
(86) International application number: PCT/CN2020/082267
(87) International publication number: WO 2021/195914

(56) References cited:
- CN-A- 105 047 892
- CN-A- 107 482 206
- CN-A- 108 336 342
- CN-A- 110 137 485
- US-A1- 2013 130 095
- HOVINGTON P. ET AL: "In situ Scanning electron microscope study and microstructural evolution of nano silicon anode for high energy Li-ion batteries", JOURNAL OF POWER SOURCES, vol. 248, 5 October 2013 (2013-10-05), AMSTERDAM, NL, pages 457 - 464, XP093033297, ISSN: 0378-7753, DOI: 10.1016/j.jpowsour.2013.09.069
- LV QIULIANG ET AL: "Hollow Structured Silicon Anodes with Stabilized Solid Electrolyte Interphase Film for Lithium-Ion Batteries", APPLIED MATERIALS & INTERFACES, vol. 7, no. 42, 19 October 2015 (2015-10-19), US, pages 23501 - 23506, XP093033395, ISSN: 1944-8244, DOI: 10.1021/acsami.5b05970
- PROFATILOVA IRINA ET AL: "Impact of Silicon/Graphite Composite Electrode Porosity on the Cycle Life of 18650 Lithium-Ion Cell", ACS APPLIED ENERGY MATERIALS, vol. 3, no. 12, 1 December 2020 (2020-12-01), pages 11873 - 11885, XP093033093, ISSN: 2574-0962, DOI: 10.1021/acsaem.0c01999

## Description

### TECHNICAL FIELD

This disclosure relates to the field of electronic technologies, and in particular, to a negative electrode material, a negative electrode plate, an electrochemical apparatus, and an electronic apparatus.

### BACKGROUND

With a theoretical specific capacitance of up to 4200 mAh/g, silicon-based materials are promising negative electrode materials for next-generation electrochemical apparatuses (for example, lithium-ion batteries). However, the silicon-based materials have a volume swelling of about 300% during charging and discharging, and have poor conductivity, which hinder further scaled application of the silicon-based materials. Currently, methods such as oxide coating and polymer coating are used to alleviate volume swelling of the silicon-based materials, so as to further improve cycling performance and rate performance of corresponding electrochemical apparatuses. Hovington P. *et al* discloses nano silicon anode for high energy Li-ion batteries with silicon particles with cavities including graphite (Journal of Power Sources, 2014 (243) 457-464). Lv Q. *et al* discloses hollow structured silicon anodes with stabilized electrolyte interphase film for lithium-ion batteries (ACS Appl. Mater. Interfaces 2015 (7) 23501-23506). However, the existing improvement solutions are unsatisfactory.

### SUMMARY

In view of the foregoing shortcomings of the prior art, this disclosure designs a structure of a silicon-based material and uses silicon-based material particles with recessed portions to alleviate volume swelling of the silicon-based material and enhance interfacial contact between different materials, thereby improving interface conductivity and improving cycling performance and rate performance of electrochemical apparatuses.

This disclosure provides a negative electrode material, including a silicon-based material, a carbon material, a conductive agent, and a binder where particles of the silicon-based material include at least one recessed portion, and the recessed portion (rp) is 50 nm to 20 µm in width, and 50 nm to 10 µm in depth, a percentage of the mass of the silicon-based material in the total mass of the silicon-based material, the carbon material, the conductive agent, and the binder being 5% to 40%.

In the foregoing negative electrode material, the particles of the silicon-based material include a plurality of recessed portions, and a joint thickness (jt) between the plurality of recessed portions is 30 nm to 10 µm, the joint thickness (jt) between recessed portions being the closest distance between recessed portions.

In the foregoing negative electrode material, the particles of the silicon-based material include at least one round-cornered structure, and an average arc length of the round-cornered structure is 1 µm to 50 µm.

In the foregoing negative electrode material, the silicon-based material includes at least one of silicon, silicon oxide, silicon carbon, or silicon oxycarbide ceramic material (SiOC).

In the foregoing negative electrode material, the negative electrode material further includes graphite and a conductive agent, and the conductive agent includes at least one of conductive carbon black, ketjen black, acetylene black, carbon nanotubes, or graphene.

In the foregoing negative electrode material, , a mass ratio of the silicon-based material, the carbon material, the conductive agent, and the binder is 5-40:55-90:0.5-10:0.5-10, and a percentage of the mass of the binder in the total mass of the silicon-based material, the carbon material, the conductive agent, and the binder is 0.5% to 10%.

This disclosure further includes a negative electrode plate, including: a current collector and an active substance layer provided on the current collector; where the active substance layer includes any one of the foregoing negative electrode materials.

This disclosure further includes an electrochemical apparatus, including: a positive electrode plate; a negative electrode plate; and a separator, disposed between the positive electrode plate and the negative electrode plate; where the negative electrode plate is the foregoing negative electrode plate.

This disclosure further provides an electronic apparatus, including the foregoing electrochemical apparatus.

This disclosure uses a silicon-based material with a recessed structure (recessed portion). Such recessed structure leaves room for the silicon-based material to swell, thereby solving the problem of large volume swelling of the silicon-based material. In addition, when the silicon-based material with a recessed structure is composited with a carbon material (for example, graphite), a conductive agent, and the like to form a negative electrode plate, small particles of the carbon material (for example, graphite) and the conductive agent are embedded into the recessed portion (rp) of the silicon-based material, solving the problem of low compacted density of the silicon-based negative electrode material with a recessed structure, and compensating for the low volumetric energy density of the recessed structure. Besides, the silicon-based material with a recessed structure can promote electrolyte diffusion and penetration, improve liquid retention capacity of the negative electrode plate, and reduce transmission impedance, thereby improving rate performance and cycling performance of a corresponding electrochemical apparatus.

### BRIEF DESCRIPTION OF DRAWINGS

FIG. 1 is an example diagram of a negative electrode material according to this disclosure.
FIG. 2 is a schematic diagram of a negative electrode plate according to this disclosure.
FIG. 3 is a scanning electron microscope image of a negative electrode plate after cycling according to this disclosure.
FIG. 4 is a schematic diagram of an electrode assembly of an electrochemical apparatus according to this disclosure.
FIG. 5 to FIG. 7 are cross-sectional views of a negative electrode plate in Example 1 according to this disclosure.

### DESCRIPTION OF EMBODIMENTS

The following embodiments may help persons skilled in the art to understand this application more comprehensively, but impose no limitation on this application in any manner.

As a next-generation negative electrode material with a high specific capacity, a silicon-based material can significantly increase energy density of electrode assemblies. However, the silicon-based material has poor conductivity, and experience large volume swelling and contraction during lithiation and delithiation. To alleviate the volume swelling of the silicon-based material, porous silicon-based material can be designed, the size of the silicon-based material can be reduced, and oxide coating, polymer coating, and carbon material coating can be used. The design of porous silicon-based material and the reduced size of the silicon-based material can improve rate performance of an electrochemical apparatus to some extent. However, as the cycling proceeds, side reactions and uncontrollable growth of solid electrolyte interface (SEI, solid electrolyte interface) film further limit cycling stability of the material. In addition, in a case that a material is applied to a surface of the silicon-based material, during processing of battery electrode plates, a carbon-coated silicon-based material may have carbon released under the action of repeated shearing forces, affecting coulombic efficiency. Moreover, generation of the SEI film consumes electrolyte. In another aspect, a carbon layer is likely to peel off from particles of the silicon-based material due to swelling, contraction, and cracking of the silicon-based material in a plurality of cycling processes. With the formation of SEI, the carbon layer is wrapped by by-products, increasing electrochemical impedance and aggravating polarization, thereby affecting cycle life.

Through structural design of silicon-based material particles, this disclosure uses recesses of the silicon-based material particles (large areas recessed and inwardly bent from the material surface) to mechanically fit with a carbon material (for example, graphite) and a conductive agent, which improves conductivity at interfaces of different materials and facilitates transmission of electrons and ions, thereby effectively reducing direct current resistance of an electrochemical apparatus. In addition, such recessed structure leaves room for the silicon-based material to swell, and its fitting with the carbon material (for example, graphite) can also alleviate the volume swelling of the silicon-based material. Moreover, the recessed portion (rp) allows the silicon-based material and the carbon material (for example, graphite) to fit with each other, so that the two materials come into closer contact at the interface. In a case that the silicon-based material is composited with a carbon material (for example, graphite) to form a negative electrode plate, small particles of the carbon material (for example, graphite) are embedded into the recessed portion (rp) of the silicon-based material, solving the problem of low compacted density of the silicon-based negative electrode material with a recessed structure, and compensating for the low volumetric energy density of the recessed structure. The recessed structure can promote electrolyte diffusion and penetration, improve liquid retention capacity of the negative electrode plate, and reduce transmission impedance, thereby improving rate performance and cycling performance of the corresponding electrochemical apparatus.

Some embodiments of this disclosure provide a negative electrode material, and the negative electrode material includes a silicon-based material, where particles of the silicon-based material include at least one recessed portion. In some embodiments, the recessed portion (rp) is 50 nm to 20 µm in width, and 50 nm to 10 µm in depth. The use of the silicon-based material with a recessed portion (rp) leaves room for volume swelling, solving the problem of large volume swelling of the silicon-based material. In addition, the carbon material (for example, graphite) and conductive agent in the negative electrode material can fall into the recessed portion (rp) of the silicon-based material, overcoming the problem of low compacted density of the silicon-based material with a recessed structure, and increasing the volumetric energy density of the negative electrode material. In some embodiments, the recessed portion (rp) has an irregular shape. In some embodiments, the recessed portion (rp) has one or more smaller recessed portions inside. In some embodiments, the silicon-based material includes at least one of silicon, silicon oxide, silicon carbon, or silicon oxycarbide ceramic material (SiOC). In some embodiments, the silicon-based material is a silicon particle material. In some embodiments, the silicon-based material includes SiOₓC_{y}M_{z}, where 0≤x≤2, 0≤y≤1, 0≤z≤0.5, and M is at least one of lithium, magnesium, titanium, or aluminum. In some embodiments, the silicon-based material particles with a recessed portion (rp) can be obtained by etching, or the like, but this disclosure is not limited thereto, and any other suitable methods can be used to obtain the silicon-based material particles with a recessed portion.

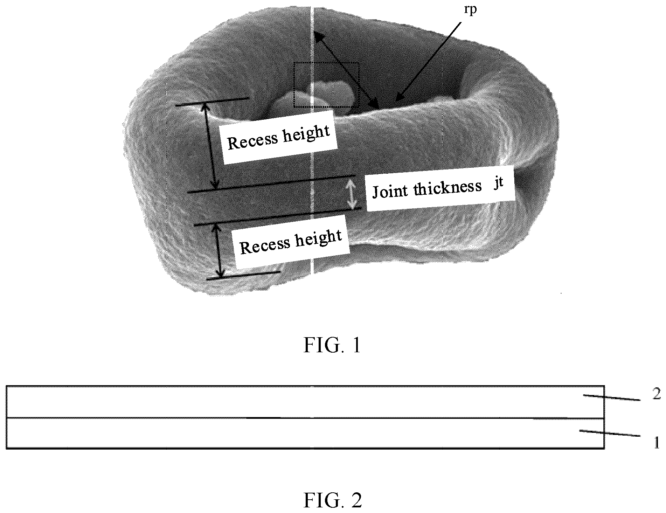

In some embodiments, the particles of the silicon-based material includes a plurality of recessed portions (rp), and a joint thickness (jt) between the plurality of recessed portions is 30 nm to 10 µm, the joint thickness (jt) between recessed portions being the closest distance between recessed portions. As shown in FIG. 1, a joint thickness (jt) between recessed portions is a closest distance between recessed portions. For example, if a silicon-based material particle has an upper recessed portion and a lower recessed portion, a joint thickness (jt) between the upper recessed portion and the lower recessed portion is a shortest distance between the two recessed portions. When the particle of the silicon-based material has a plurality of recessed portions, a joint thickness (jt) can be maintained between the recessed portions to avoid forming a hollow structure, thereby helping improve compacted density and volumetric energy density of the negative electrode material.

In some embodiments, the particles of the silicon-based material include at least one round-cornered structure, and an average arc length of the round-cornered structure is 1 µm to 50 µm. The round-cornered structure of the particles of the silicon-based material facilitates slipping of the graphite, conductive agent, and the like into the recessed portion (rp) when the graphite, conductive agent, and the like are mixed.

In some embodiments, the negative electrode material further includes graphite and a conductive agent, and at least part of the graphite is located in the recessed portion (rp) of the silicon-based material. As shown in FIG. 1, the silicon-based material has small graphite particles inside the recessed portion (as shown by the dashed-line box in FIG. 1). In some embodiments, an average width of the recessed portions is a, a median particle size D50 of the graphite is b, and an average minimum particle width of the graphite is c, where c<a, and b<3a. In some embodiments, a width of the recessed portion (rp) is the dimension corresponding to a shorter side of the recessed portion, a length of the recessed portion (rp) is the dimension of a longer side, and a minimum particle width of graphite is a smallest value of a width corresponding to a shorter side of the graphite particle. Letting c<a and b<3a allows the graphite and the conductive agent to better fit into or fall into the recessed portion (rp) of the silicon-based material particle when the silicon-based material, graphite, conductive agent, and the like are composited to form the negative electrode plate, thereby enhancing the conductivity of the negative electrode material and increasing the compacted density of the negative electrode material. In some embodiments, the graphite includes artificial graphite, natural graphite, or a combination thereof, where the artificial graphite or the natural graphite includes at least one of carbonaceous mesophase spherule, soft carbon, or hard carbon. In some embodiments, the conductive agent is a carbon-containing conductive agent. In some embodiments, the conductive agent includes at least one of conductive carbon black, ketjen black, acetylene black, carbon nanotubes, or graphene.

The negative electrode material includes a carbon material, a conductive agent, and a binder. In some embodiments, the carbon material in the negative electrode material includes graphite and/or graphene. In some embodiments, a mass ratio of the silicon-based material, the carbon material, the conductive agent, and the binder is 5-40:55-90:0.5-10:0.5-10. A percentage of the mass of the silicon-based material in the total mass of the silicon-based material, the carbon material, the conductive agent, and the binder is 5% to 40%. If the percentage of the silicon-based material is too low, the specific capacity cannot be increased greatly. If the percentage of the silicon-based material is more than 40%, the compacted density and liquid retention capacity of the negative electrode plate are reduced greatly. This is because the silicon-based material with a recessed structure has low compacted density, but when the silicon-based material with a recessed structure is used with the carbon material (for example, graphite) and the conductive agent, the carbon material and the conductive agent enter the recessed portion (rp) of the silicon-based material, overcoming the disadvantage of low compacted density of the silicon-based material, and improving electrolyte retention capacity of the negative electrode plate. When an excessive amount of silicon-based material with a recessed structure is added, the shortcoming of the silicon-based material dominates, causing the compacted density and liquid retention capacity to decrease.

In some embodiments, a percentage of the mass of the conductive agent in the total mass of the silicon-based material, the carbon material, the conductive agent, and the binder is 0.5% to 10%. In some embodiments, the percentage of the conductive agent is appropriately increased, which allows more conductive agent inside the recessed portion (rp) of the silicon-based material to improve the conductivity of the negative electrode material. This does not affect the compacted density and the liquid retention capacity, but can improve the cycling performance of the negative electrode plate and reduce the direct current resistance. However, when the percentage of the conductive agent is too high, the volumetric energy density of the negative electrode material is reduced.

In some embodiments, a median particle size of the silicon-based particles is 500 nm to 50 µm. If the median particle size of the silicon-based material is too small, the silicon-based material tends to agglomerate and consume more electrolyte to form a SEI film due to a large specific surface area. If the median particle size of the silicon-based material is too large, it is unfavorable to suppress the volume swelling of the silicon-based material and is likely to cause deterioration of the conductivity of an active substance layer. In addition, if the median particle size of the silicon-based material is too large, the strength of the negative electrode plate is reduced.

As shown in FIG. 2, some embodiments of this disclosure provide a negative electrode plate, where the negative electrode plate includes a current collector 1 and an active substance layer 2. The active substance layer 2 is provided on the current collector 1. It should be understood that the active substance layer 2 being provided on one side of the current collector 1 in FIG. 2 is only an example, and the active substance layer 2 may be provided on two sides of the current collector 1. In some embodiments, the current collector of the negative electrode plate may include at least one of copper foil, aluminum foil, nickel foil, or carbon-based current collectors. In some embodiments, the active substance layer 2 includes any one of the foregoing negative electrode materials.

In some embodiments, the active substance layer includes a silicon-based material, a carbon material, a conductive agent, and a binder; a mass ratio of the silicon-based material, the carbon material, the conductive agent, and the binder is 5-40:55-90:0.5-10:0.5-10; a mass percentage of the silicon-based material in the active substance layer is 5% to 40%; and a mass percentage of the conductive agent in the active substance layer is 0.5% to 10%. In some embodiments, the foregoing silicon-based material, carbon material, and conductive agent may be selected. In some embodiments, the binder may include at least one of carboxymethyl cellulose (CMC), polyacrylic acid, polyvinyl pyrrolidone, polyaniline, polyimide, polyamide-imide, polysiloxane, polymerized styrene butadiene rubber, epoxy resin, polyester resin, urethane resin, or polyfluorene. In some embodiments, a mass percentage of the binder in the active substance layer is 0.5% to 10%. In some embodiments, thickness of the active substance layer is 50 µm to 200 µm, and compacted density of the negative electrode material in the active substance layer under a pressure of 5t is 0.8 g/cm³ to 5 g/cm³. In some embodiments, a mass percentage of carbon in the active substance layer is 0% to 80%. In some embodiments, a specific surface area of the negative electrode material in the active substance layer is 1 m²/g to 50 m²/g.

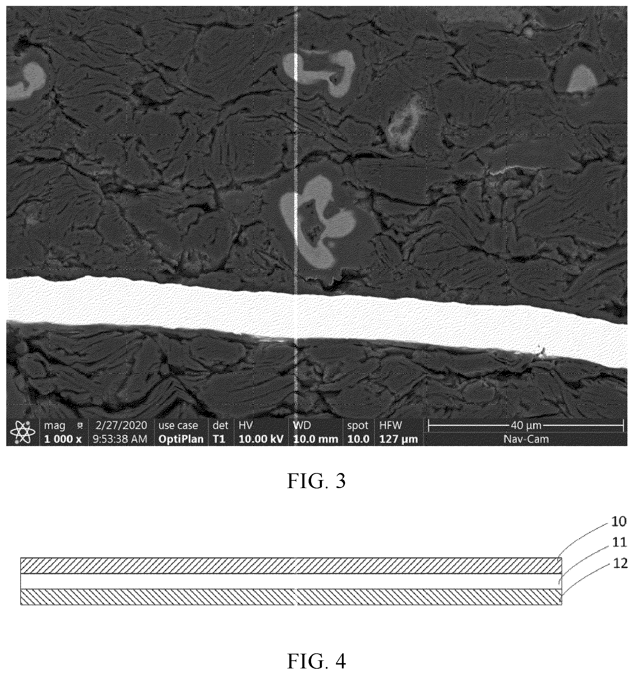

In some embodiments, based on the profile of the silicon-based material, this disclosure uses the recessed structure to solve some problems caused by the volume swelling of the silicon-based material. The silicon-based material with a recessed structure is used with the carbon material (for example, graphite) and conductive agent to form a negative electrode plate, which compensates for the low compacted density of the silicon-based material with a recessed portion, solves the problems caused by the volume swelling of the silicon-based material, and increases the direct current resistance and liquid retention capacity of the negative electrode plate, thereby improving the cycling performance and the like of the corresponding electrochemical apparatus. FIG. 3 is a scanning electron microscope image of a negative electrode plate after cycling. Due to the advantages of the recessed structure of the silicon-based material, when the silicon-based material is used with the carbon material (for example, graphite) and conductive agent to form a negative electrode plate, the structure of the silicon-based material does not change significantly after cycling.

As shown in FIG. 4, some embodiments of this disclosure provide an electrochemical apparatus, where the electrochemical apparatus includes a positive electrode plate 10, a negative electrode plate 12, and a separator 11 disposed between the positive electrode plate 10 and the negative electrode plate 12. The positive electrode plate 10 may include a positive electrode current collector and a positive electrode active substance layer applied on the positive electrode current collector. In some embodiments, the positive electrode active substance layer may be applied on only part of the positive electrode current collector. The positive electrode active substance layer may include a positive electrode active substance, a conductive agent, and a binder. The positive electrode current collector may be Al foil, or may be another positive electrode current collector commonly used in the art. The conductive agent in the positive electrode plate may include at least one of conductive carbon black, laminated graphite, graphene, or carbon nanotubes. The binder in the positive electrode plate may include at least one of polyvinylidene fluoride, vinylidene fluoride-hexafluoropropylene copolymer, styrene-acrylate copolymer, styrene-butadiene copolymer, polyamide, polyacrylonitrile, polyacrylate, polyacrylic acid, polyacrylate, sodium carboxymethylcellulose, polyvinyl acetate, polyvinylpyrrolidone, polyvinyl ether, polymethyl methacrylate, polytetrafluoroethylene, or polyhexafluoropropylene. The positive electrode active substance includes, but is not limited to, at least one of lithium cobaltate, lithium nickelate, lithium manganate, lithium nickel manganate, lithium nickel cobalt oxide, lithium iron phosphate, lithium nickel cobalt aluminate, or lithium nickel cobalt manganate. The foregoing positive electrode active substance may be doped or coated. In some embodiments, a separator 11 includes at least one of polyethylene, polypropylene, polyvinylidene fluoride, polyethylene terephthalate, polyimide, or aramid. For example, polyethylene includes at least one of high-density polyethylene, low-density polyethylene, or ultra-high molecular weight polyethylene. Particularly, polyethylene and polypropylene have a good effect on preventing short circuit, and can improve stability of a battery through a shutdown effect. In some embodiments, thickness of the separator ranges from approximately 5 µm to 500 µm.

In some embodiments, a surface of the separator may further include a porous layer. The porous layer is disposed on at least one surface of the separator and includes inorganic particles and a binder, where the inorganic particles are selected from at least one of aluminum oxide (Al₂O₃), silicon oxide (SiO₂), magnesium oxide (MgO), titanium oxide (TiO₂), hafnium oxide (HfO₂), stannic oxide (SnO₂), cerium dioxide (CeO₂), nickel oxide (NiO), zinc oxide (ZnO), calcium oxide (CaO), zirconium oxide (ZrO₂), yttrium oxide (Y₂O₃), silicon carbide (SiC), boehmite, aluminum hydroxide, magnesium hydroxide, calcium hydroxide, or barium sulfate. In some embodiments, a pore of the separator has a diameter ranging from approximately 0.01 µm to 1 µm. The binder is selected from at least one of polyvinylidene fluoride, vinylidene fluoride-hexafluoropropylene copolymer, polyamide, polyacrylonitrile, polyacrylate, polyacrylic acid, polyacrylate, sodium carboxymethylcellulose, polyvinylpyrrolidone, polyvinyl ether, polymethyl methacrylate, polytetrafluoroethylene, or polyhexafluoropropylene. The porous layer on the surface of the separator can improve heat resistance, oxidation resistance, and electrolyte infiltration performance of the separator, and enhances adhesion between the separator and the electrode plate.

In some embodiments, the negative electrode plate 12 may be the foregoing negative electrode plate.

In some embodiments of this disclosure, an electrode assembly of the electrochemical apparatus is a wound electrode assembly or a stacked electrode assembly.

In some embodiments, the electrochemical apparatus includes a lithium-ion battery, but this disclosure is not limited thereto. In some embodiments, the electrochemical apparatus may further include an electrolyte. In some embodiments, the electrolyte includes but is not limited to at least two of dimethyl carbonate (DMC), ethyl methyl carbonate (EMC), diethyl carbonate (DEC), ethylene carbonate (EC), propylene carbonate (PC), or propyl propionate (PP). In addition, the electrolyte may further additionally include at least one of vinylene carbonate (VC), fluoroethylene carbonate (FEC), or a dinitrile compound serving as an electrolyte additive. In some embodiments, the electrolyte further includes a lithium salt.

In some embodiments of this disclosure, a lithium-ion battery is used as an example. A positive electrode plate, a separator, and a negative electrode plate are wound or stacked in sequence to form an electrode assembly, and the electrode assembly is then packaged, for example, in an aluminum-plastic film, followed by injection of an electrolyte, formation, and packaging, so that the lithium-ion battery is prepared. Then, performance and cycling tests are performed on the prepared lithium-ion battery.

Those skilled in the art will understand that the method for preparing the electrochemical apparatus (for example, the lithium-ion battery) described above is only an embodiment. Without departing from the content disclosed in this application, other methods commonly used in the art may be used.

An embodiment of this disclosure further provides an electronic apparatus including the foregoing electrochemical apparatus. The electronic apparatus in this application is not particularly limited, and the electronic apparatus may be any known electronic apparatus in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, a lithium-ion capacitor, and the like.

Some specific examples and comparative examples are listed below to better illustrate this disclosure. Lithium-ion batteries are used for illustration.

### Example 1

Preparation of negative electrode plate: A current collector was copper foil with a thickness of 10 µm; active materials were Si and graphite, a conductive agent was conductive carbon black, and a binder was polyacrylic acid; the active material, conductive carbon black, and binder were mixed and then dispersed in deionized water to form a slurry, and the slurry was uniformly agitated and then applied onto the copper foil, with a coating weight controlled to 0.108 kg/1540.25 m². Drying, cold pressing, and slitting were then performed to obtain a negative electrode plate. Table 1 shows corresponding parameters.

Preparation of positive electrode plate: A positive electrode active substance LiCoO₂, conductive carbon black, and a binder polyvinylidene fluoride (PVDF) were fully stirred and uniformly mixed in an N-methylpyrrolidone solvent system at a mass ratio of 96.7:1.7:1.6, and then the resulting mixture was applied onto an aluminum foil, followed by drying and cold pressing to obtain a positive electrode plate.

Preparation of battery: With a polyethylene porous polymeric film as a separator, a positive electrode plate, a separator, and a negative electrode plate were stacked in sequence, so that the separator was placed between the positive and negative electrode plates for isolation, and the stack was wound to obtain an electrode assembly. The electrode assembly was placed in an outer packaging aluminum-plastic film, electrolyte including ethylene carbonate (EC), diethyl carbonate (DEC), and dimethyl carbonate (DMC) in a volume ratio of 1:1:1 was injected, and the outer package was sealed, followed by processes such as formation, degassing, and trimming, to obtain a lithium-ion battery.

In Examples 2 to 12 and Comparative Examples 1 to 4, the positive electrode plate and lithium-ion battery are prepared in the same way as in Example 1, except for some differences in the preparation of the negative electrode plate. Differences in parameters are shown in Table 1.

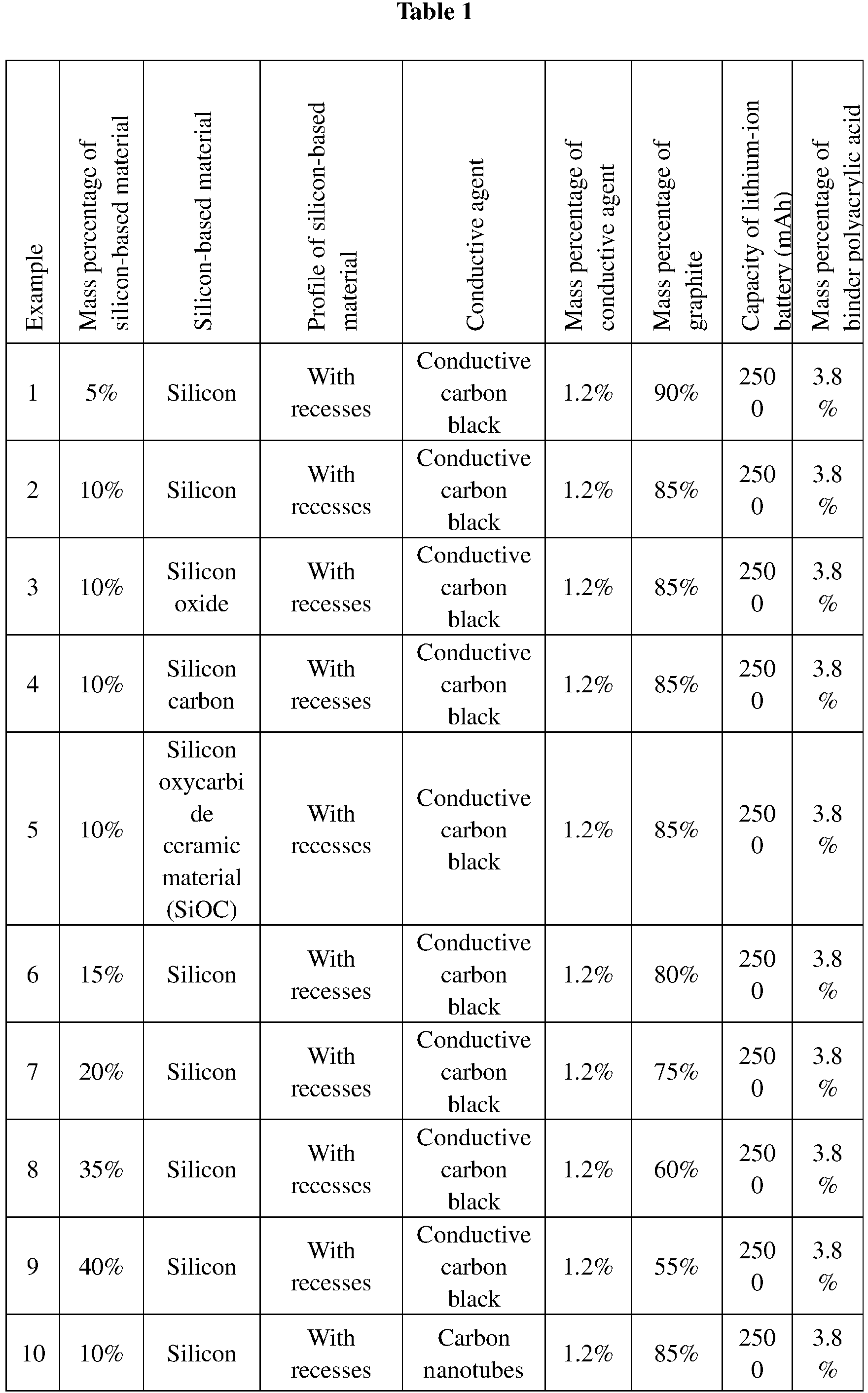

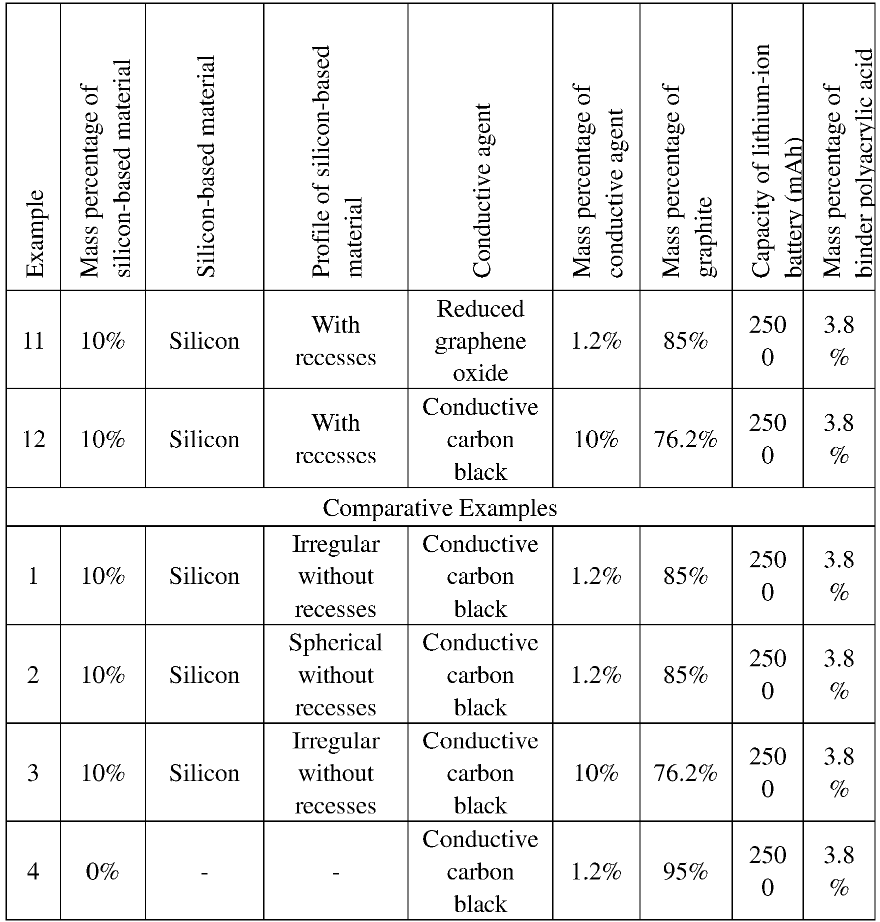

Methods for measuring performance parameters in Examples and Comparative Examples are as follows.

### Compacted density test for electrode plate:

Compaction was performed with a pressure of 30t, a wafer with an area of 1540.25 mm² was obtained through punching, thickness of the wafer was measured with a micrometer, the wafer was weighed, and the volume of the wafer was calculated. Then, compacted density of the electrode plate could be calculated.

### Electrolyte retention coefficient test:

The appearance of an electrode assembly of an electrochemical apparatus was observed. A sealed pocket (pocket) of the electrode assembly has no obvious liquid bubbles or folds on the surface, and is in a cookie-like shape. Weight of the electrolyte inside the electrode assembly was recorded. Electrolyte retention coefficient=Liquid retention capacity/capacity of electrode assembly.

### Cycling performance test:

At a test temperature of 25°C/45°C, batteries were charged to 4.4 V at a constant current of 0.7C, then charged at a constant voltage to 0.025C, left standing for 5 minutes, and then discharged to 3.0 V at 0.5C. A capacity obtained in this step was an initial capacity, and then, a 0.7C charge/0.5C discharge cycle test was performed. A ratio of a capacity obtained in each step to the initial capacity was calculated to obtain a capacity degradation curve. The number of cycles to 90% capacity retention at 25°C was recorded as room temperature cycling performance of the electrode assembly, the number of cycles to 80% capacity retention at 45°C was recorded as high-temperature cycling performance of the electrode assembly, and the cycling performance of the material was obtained by comparing the numbers of cycles in the above two cases.

### Swelling rate test for electrode assembly:

Thickness of a half-charged fresh electrode assembly was measured by using a spiral micrometer. After 500 cycles, thickness of the electrode assembly was measured by using the spiral micrometer, and compared with the initial thickness of the half-charged fresh electrode assembly, to obtain the swelling rate of the electrode assembly.

### Direct current resistance (DCR) test:

An actual capacity of the electrode assembly was tested by using a Maccor machine at 25°C (charged to 4.4 V at a constant current of 0.7C, charged to 0.025C at a constant voltage, left standing for 10 minutes, discharged to 3.0 V at 0.1C, and left standing for 5 minutes). The battery was discharged at 0.1C to specific states of charge (SOC). The discharge test was performed for 1s with a sample collected every 5 ms, and DCR values at different SOCs were calculated.

The results of Examples 1 to 12 and Comparative Examples 1 to 4 are analyzed, and the analysis results are shown in Table 2.

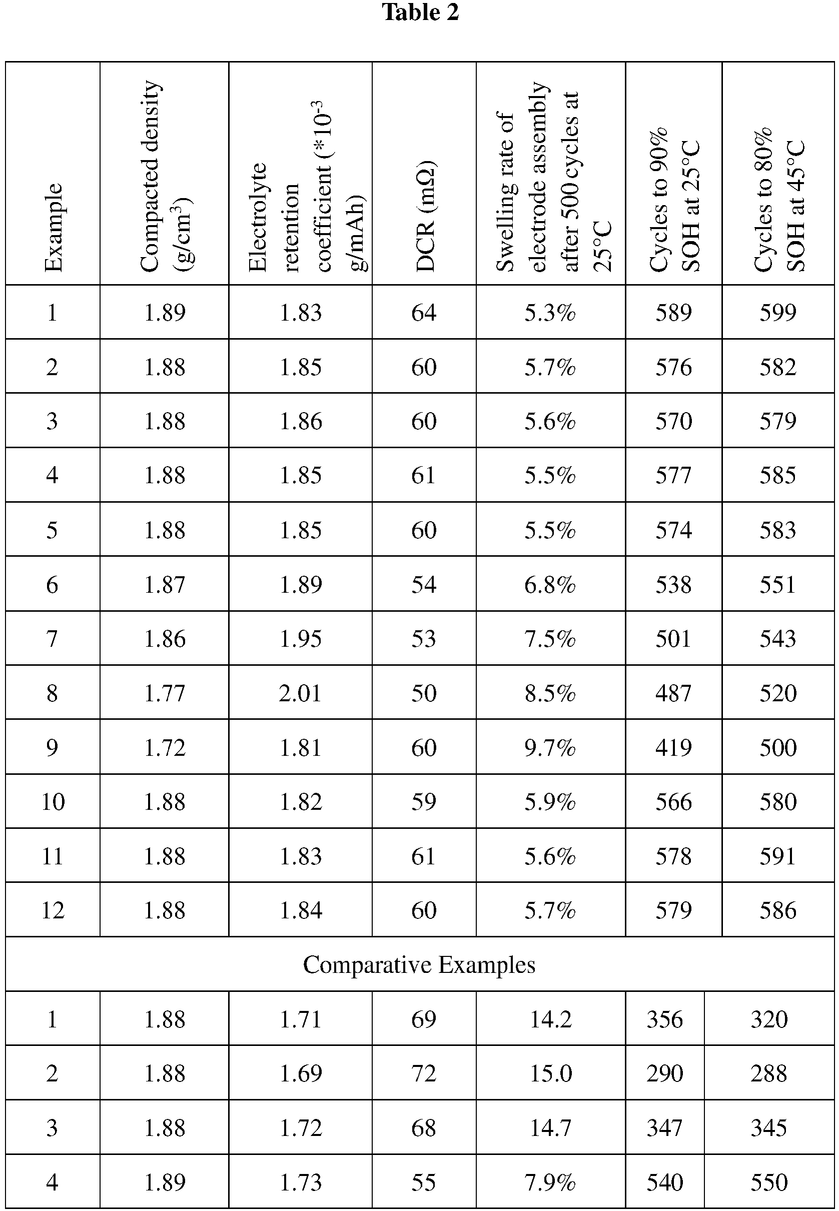

According to comparison between Examples 1 to 12 and Comparative Examples 1 to 3, after silicon-based materials with recessed structures were used, the electrolyte retention coefficient of the electrode assembly was increased to different extents, DCR was reduced, the swelling rate of the electrode assembly was reduced, and the cycling performance of the electrochemical apparatus was improved.

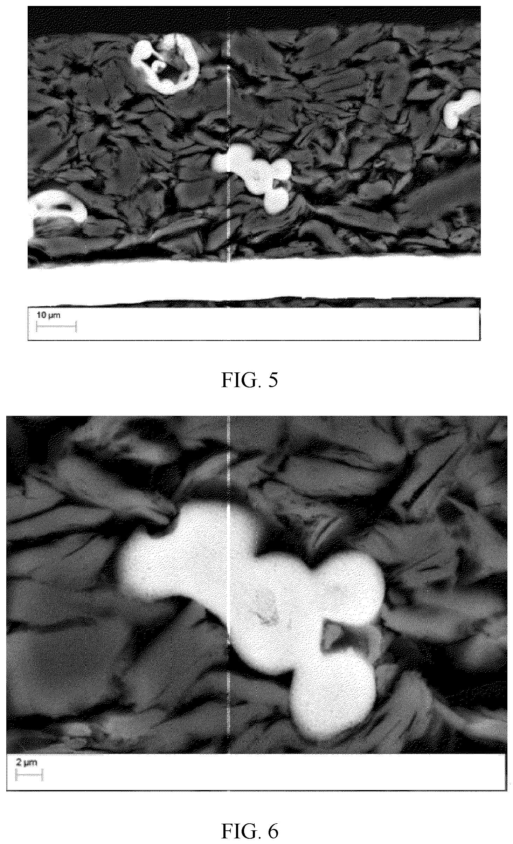

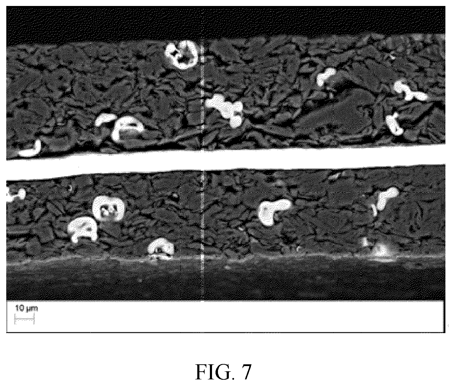

According to comparison between Examples 1, 2, and 6 to 9, the compacted density of the negative electrode plate under given pressure did not change obviously along with the increased use of silicon-based material with recessed structures in the negative electrode plate. The compacted density of the negative electrode plate had some decrease when the percentage of silicon-based material was increased to 35%. The compacted density and electrolyte retention of the negative electrode plate decreased more when the percentage was increased to 40%. This is because the silicon-based material with recessed structures has low compacted density in itself, but when used with the graphite and conductive agent, the graphite and conductive agent enter the recessed portions of the silicon-based material, compensating for the low compacted density of the silicon-based material, and improving the electrolyte retention of the negative electrode plate. When an excessive amount of silicon-based material with recessed structures is added, the shortcoming of the silicon-based material dominates, causing the compacted density and electrolyte retention capacity to decrease. FIG. 5 to FIG. 7 show cross-sectional views of the negative electrode plate in Example 1 according to this disclosure.

According to comparison between Examples 2 to 5, with a recessed structure the use of different types of silicon-based materials with a recessed structure can all increase the amount of electrolyte retained, reduce the DCR, and reduce swelling and improve cycling performance of the electrochemical apparatus.

According to comparison between Examples 2, 10, and 11, when other types of conductive agents instead of conductive carbon black (Super P) were used, the silicon-based material with recessed structures could still help achieve excellent compacted density and liquid retention of the negative electrode plate, with improved cycling performance of the electrochemical apparatuses and reduced direct current resistance. According to comparison between Examples 2 and 12, appropriately increasing the percentage of conductive agent allowed for more conductive agent in the recessed portions, improving the conductivity of the negative electrode material, which did not affect the compacted density and electrolyte retention, but could improve the cycling performance of the electrochemical apparatus and reduce the direct current resistance. According to comparison between Example 2 and Comparative Examples 1 and 2, the use of a silicon-based material with recessed structures could increase the amount of electrolyte retained, and reduce the swelling of the electrode assembly, thereby improving the cycling performance of the electrochemical apparatus and reducing the direct current resistance.

According to comparison between Example 12 and Comparative Example 3, under an increased percentage of conductive agent, the use of a silicon-based material with a recessed structure can still facilitate relatively high compacted density and electrolyte retention with better cycling performance and swelling performance of the electrochemical apparatus.

According to comparison between Examples 1, 2, 6 and 7 and Comparative Example 4, when the percentage of the silicon-based material with a recessed structure was less than or equal to 20%, the compacted density and liquid retention capacity of the negative electrode plate was approximate to those of a negative electrode plate without a silicon-based material, and the swelling rate of the electrode assembly was also approximate to that of the electrode assembly without a silicon-based material. This indicates that the shortcoming of low compacted density of the silicon-based material with a recessed structure has been completely overcome by combining the silicon-based material with a recessed portion with the graphite and conductive agent.

## Claims

1. A negative electrode material, comprising:
a silicon-based material, a carbon material, a conductive agent, and a binder,
wherein particles of the silicon-based material comprise at least one recessed portion (rp), and the recessed portion (rp) is 50 nm to 20 µm in width, and 50 nm to 10 µm in depth
**characterized in that**, a percentage of the mass of the silicon-based material in the total mass of the silicon-based material, the carbon material, the conductive agent, and the binder is 5% to 40%.

2. The negative electrode material according to claim 1, **characterized in that**, the particles of the silicon-based material comprise a plurality of recessed portions (rp), and a joint thickness (jt) between the plurality of recessed portions is 30 nm to 10 µm, the joint thickness (jt) between recessed portions (rp) being the closest distance between recessed portions.

3. The negative electrode material according to any one of claims 1 to 2, **characterized in that**, the particles of the silicon-based material further comprise at least one round-cornered structure, and an average arc length of the round-cornered structure is 1 µm to 50 µm.

4. The negative electrode material according to any one of claims 1 to 3, **characterized in that**, the silicon-based material comprises at least one of silicon, silicon oxide, silicon carbon, or silicon oxycarbide ceramic material (SiOC).

5. The negative electrode material according to any one of claims 1 to 4, **characterized in that**, the negative electrode material further comprises graphite and a conductive agent, and the conductive agent comprises at least one of conductive carbon black, ketjen black, acetylene black, carbon nanotubes, or graphene.

6. The negative electrode material according to any one of claims 1 to 5, **characterized in that**, a mass ratio of the silicon-based material, the carbon material, the conductive agent, and the binder is 5-40:55-90:0.5-10:0.5-10, and a percentage of the mass of the binder in the total mass of the silicon-based material, the carbon material, the conductive agent, and the binder is 0.5% to 10%.

7. An electrochemical apparatus, comprising:
a positive electrode plate;
a negative electrode plate; and
a separator, disposed between the positive electrode plate and the negative electrode plate;
**characterized in that**, the negative electrode plate comprises the negative electrode material according to any one of claims 1 to 6.

8. An electronic apparatus, comprising the electrochemical apparatus according to claim 7.

## Patentansprüche

1. Negatives Elektrodenmaterial, umfassend:
ein siliziumbasiertes Material, ein Kohlenstoffmaterial, ein leitfähiges Mittel und ein Bindemittel,
wobei Partikel des siliziumbasierten Materials mindestens einen ausgesparten Abschnitt (rp) umfassen, und der ausgesparte Abschnitt (rp) 50 nm bis 20 µm in der Breite und 50 nm bis 10 µm in der Tiefe ist,
**dadurch gekennzeichnet, dass** ein Prozentsatz der Masse des siliziumbasierten Materials in der Gesamtmasse des siliziumbasierten Materials, des Kohlenstoffmaterials, des leitfähigen Mittels und des Bindemittels 5 % bis 40 % beträgt.

2. Negatives Elektrodenmaterial nach Anspruch 1, **dadurch gekennzeichnet, dass** die Partikel des siliziumbasierten Materials eine Vielzahl von ausgesparten Abschnitten (rp) umfassen und die Fugendicke (jt) zwischen der Vielzahl von ausgesparten Abschnitten 30 nm bis 10 µm beträgt, wobei die Fugendicke (jt) zwischen ausgesparten Abschnitten (rp) den geringsten Abstand zwischen ausgesparten Abschnitten darstellt.

3. Negatives Elektrodenmaterial nach einem der Ansprüche 1 bis 2, **dadurch gekennzeichnet, dass** die Partikel des siliziumbasierten Materials weiter mindestens eine Struktur mit abgerundeten Ecken umfassen, und eine durchschnittliche Bogenlänge der Struktur mit abgerundeten Ecken 1 µm bis 50 µm beträgt.

4. Negatives Elektrodenmaterial nach einem der Ansprüche 1 bis 3, **dadurch gekennzeichnet, dass** das siliziumbasierte Material mindestens eines von Silizium, Siliziumoxid, Silizium-Kohlenstoff oder Siliziumoxykarbid-Keramikmaterial (SiOC) umfasst.

5. Negatives Elektrodenmaterial nach einem der Ansprüche 1 bis 4, **dadurch gekennzeichnet, dass** das negative Elektrodenmaterial weiter Graphit und ein leitfähiges Mittel umfasst, und das leitfähige Mittel mindestens eines von leitfähigem Ruß, Ketjen-Schwarz, Acetylenschwarz, Kohlenstoff-Nanoröhren oder Graphen umfasst.

6. Negatives Elektrodenmaterial nach einem der Ansprüche 1 bis 5, **dadurch gekennzeichnet, dass** das Massenverhältnis des siliziumbasierten Materials, des Kohlenstoffmaterials, des leitfähigen Mittels und des Bindemittels 5-40:55-90:0,5-10:0,5-10 beträgt und der Prozentsatz der Masse des Bindemittels an der Gesamtmasse des siliziumbasierten Materials, des Kohlenstoffmaterials, des leitfähigen Mittels und des Bindemittels 0,5 % bis 10 % beträgt.

7. Elektrochemische Einrichtung, umfassend:
eine positive Elektrodenplatte;
eine negative Elektrodenplatte; und
einen Separator, der zwischen der positiven Elektrodenplatte und der negativen Elektrodenplatte angeordnet ist,
**dadurch gekennzeichnet, dass** die negative Elektrodenplatte das negative Elektrodenmaterial nach einem der Ansprüche 1 bis 6 umfasst.

8. Elektronische Einrichtung, welche die elektrochemische Einrichtung nach Anspruch 7 umfasst.

## Revendications

1. Un matériau d'électrode négative, comprenant :
un matériau à base de silicium, un matériau carboné, un agent conducteur et un liant,
dans lequel les particules du matériau à base de silicium comprennent au moins une partie en retrait (rp), et la partie en retrait (rp) a une largeur de 50 nm à 20 µm et une profondeur de 50 nm à 10 µm,
**caractérisé en ce que**, un pourcentage de la masse du matériau à base de silicium dans la masse totale du matériau à base de silicium, du matériau carboné, de l'agent conducteur et du liant est de 5 % à 40 %.

2. Le matériau d'électrode négative selon la revendication 1, **caractérisé en ce que**, les particules du matériau à base de silicium comprennent une pluralité de parties en retrait (rp), et une épaisseur de joint (jt) entre la pluralité de parties en retrait étant de 30 nm à 10 µm, l'épaisseur de joint (jt) entre les parties en retrait (rp) étant la distance la plus proche entre les parties en retrait.

3. Le matériau d'électrode négative selon l'une quelconque des revendications 1 à 2, **caractérisé en ce que**, les particules du matériau à base de silicium comprennent en outre au moins une structure à coins arrondis, et une longueur d'arc moyenne de la structure à coins arrondis de 1 µm à 50 µm.

4. Le matériau d'électrode négative selon l'une quelconque des revendications 1 à 3, **caractérisé en ce que**, le matériau à base de silicium comprend au moins l'un parmi le silicium, l'oxyde de silicium, le carbure de silicium ou un matériau céramique au carbure oxyde de silicium (SiOC).

5. Le matériau d'électrode négative selon l'une quelconque des revendications 1 à 4, **caractérisé en ce que**, le matériau d'électrode négative comprend en outre du graphite et un agent conducteur, et l'agent conducteur comprend au moins l'un parmi le noir de carbone conducteur, le noir de Ketjen, le noir d'acétylène, les nanotubes de carbone ou le graphène.

6. Le matériau d'électrode négative selon l'une quelconque des revendications 1 à 5, **caractérisé en ce que**, un rapport massique du matériau à base de silicium, du matériau carboné, de l'agent conducteur et du liant est de 5-40:55-90:0.5-10:0.5-10, et un pourcentage de la masse du liant dans la masse totale du matériau à base de silicium, du matériau carboné, de l'agent conducteur et du liant est de 0.5 % à 10 %.

7. Un appareil électrochimique, comprenant :
une plaque d'électrode positive ;
une plaque d'électrode négative ; et
un séparateur, disposé entre la plaque d'électrode positive et la plaque d'électrode négative ;
**caractérisé en ce que**, la plaque d'électrode négative comprend le matériau d'électrode négative selon l'une quelconque des revendications 1 à 6.

8. Un appareil électronique, comprenant l'appareil électrochimique selon la revendication 7.
